**Europäisches Patentamt**

**European Patent Office**

**Office européen des brevets**

(19)

(11) Numéro de publication : **0 487 369 A1**

# (12) DEMANDE DE BREVET EUROPEEN

(21) Numéro de dépôt : **91402894.9**

(22) Date de dépôt : **29.10.91**

(51) Int. Cl.⁵ : **F02F 11/00**, F16J 15/12

(30) Priorité : **23.11.90 FR 9014608**

(43) Date de publication de la demande :
**27.05.92 Bulletin 92/22**

(84) Etats contractants désignés :
**BE DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Houdard, Hervé**
**41, Avenue Georges Clémenceau**
**F-14000 Caen (FR)**

(54) **Joint de culasse.**

(57) Joint de culasse, destiné à être placé entre le bloc cylindres (2) et la culasse (3) d'un moteur à combustion interne, comprenant une plaque (28) constituant l'armature munie d'orifices pour le passage des fluides et de joints d'étanchéité autour de ces orifices, l'étanchéité aux gaz de combustion étant réalisée au niveau de chaque cylindre (9) par une pièce de révolution ou segment de feu (24), ledit segment (24) présentant des surfaces supérieure (23) ou inférieure (22) destinées à venir en contact avec respectivement la culasse (3) et le bloc cylindres (2), une surface extérieure (26) assurant la liaison avec ladite plaque (28) et une surface libre intérieure (27) destinée à assurer la continuité de la chambre de combustion entre le cylindre (9) et la cavité (6) en regard portée par la culasse (3), caractérisé en ce qu'après le serrage de la culasse (3) sur le bloc cylindres (2), la surface intérieure libre (27) du segment de feu (24) soit uniformément concave.

FIG.3

La présente invention concerne un joint de culasse pour moteur à combustion interne.

La plupart des moteurs refroidis par eau sont montés avec un joint pour assurer l'étanchéité entre le bloc cylindres ou carter moteur et la culasse.

Le joint de culasse reproduit toutes les ouvertures correspondant à l'alésage des cylindres, aux trous des passages d'eau et d'huile ainsi que des différents goujons de fixation de la culasse sur le bloc cylindres. Le joint comporte des étanchéités autour des orifices qui laissent passer des fluides tels que l'eau de refroidissement, l'huile de lubrification et les gaz de combustion. L'étanchéité aux gaz de combustion est la plus difficile à obtenir du fait des températures et des pressions très élevées des gaz de combustion.

Cette étanchéité est remplie par des anneaux ou segments de feu obtenus par découpe, emboutissage et sertissage d'une tôle métallique sur le bord des ouvertures pratiquées dans le corps du joint qui est pour sa part réalisé en un matériau métallo-plastiques tel qu'un carton d'amiante armé ou non ou bien encore en une plaque d'acier pour les joints de type Curtyrem.

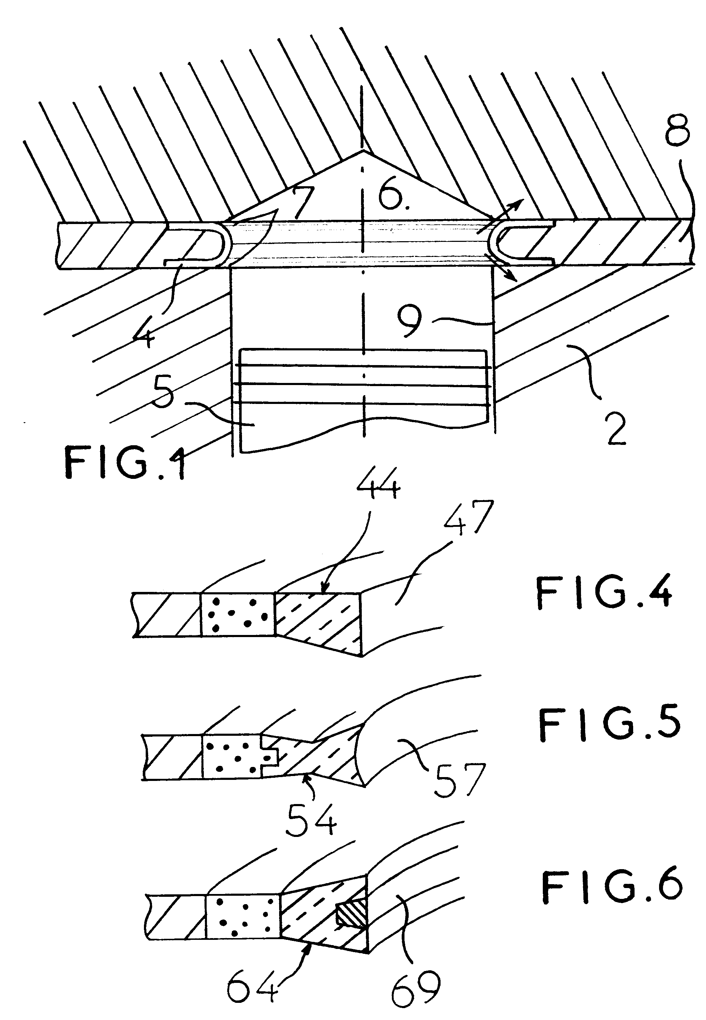

Les anneaux de feu sont classiquement réalisés, cf figure 1, par des anneaux de métal profilés en U. Or il est apparu à la demanderesse qu'une telle forme est particulièrement défavorable à la réalisation de l'étanchéité.

Du fait du profil en U, il se forme en effet, deux cavités annulaires en retrait de l'alésage cylindrique au droit des surfaces convexes de l'anneau, entre le joint et la culasse et entre le joint et le carter cylindres et ces cavités en forme de coin ont pour effet d'écarter la culasse et le bloc cylindres lorsque la pression monte dans la chambre de combustion ce qui favorise la fuite des gaz de combustion.

On remédie à cet inconvénient en serrant fortement la culasse sur le bloc cylindres mais ce serrage intense a pour effet de déformer et de fragiliser la culasse.

La présente invention vise à résoudre ce problème en proposant un joint de culasse comportant des segments de feu de conception particulièrement novatrice.

L'objet de la présente invention est la réalisation d'un joint de culasse qui assure parfaitement l'étanchéité aux gaz de combustion sans nécessiter un fort serrage de la culasse sur le bloc cylindres, ce joint étant de plus, simple et économique à réaliser.

Le joint de culasse selon l'invention est donc destiné à être placé entre le bloc cylindres et la culasse d'un moteur à combustion interne. Il comprend une plaque constituant l'armature, plaque muni d'orifices pour le passage des fluides : eau de refroidissement, huile de lubrification, gaz de combustion... Autour de ces orifices sont disposés des joints d'étanchéité, l'étanchéité aux gaz de combustion est réalisée au niveau de chaque cylindre par un anneau ou segment de feu. Ce segment présente des surfaces supérieure et inférieure destinées à venir en contact respectivement avec la culasse et le bloc cylindres, une surface extérieure de liaison avec la plaque ou armature et une surface libre intérieure destinée à assurer la continuité de la chambre de combustion entre le cylindre et la cavité en regard portée par la culasse.

Selon l'invention le joint de culasse est caractérisé en ce qu'après le serrage de la culasse sur le bloc cylindres la surface intérieure libre du segment de feu soit uniformément concave.

Ainsi lors de la combustion-explosion, les forces qui s'exercent sur la surface libre concave du joint ont des résultantes radiales qui tendent à accentuer la concavité de la surface et donc à écraser le segment de feu. Ce phénomène a pour effet de resserrer la culasse sur le bloc cylindres et ainsi d'accentuer l'étanchéité du joint.

Selon une caractéristique de l'invention le segment de feu a sa surface intérieure libre, avant serrage de la culasse sur le bloc cylindres, sensiblement droite ou concave.

Selon une caractéristique de l'invention le segment de feu présente une hauteur maximale, avant serrage de la culasse sur le bloc cylindres, au niveau de la surface libre intérieure.

Selon une caractérisque de l'invention le segment de feu présente, avant serrage de la culasse sur le bloc cylindre, une section radiale qui évolue en s'évasant au voisinage de la surface libre intérieure.

Selon un mode de réalisation de l'invention le segment de feu est constitué par un corps de révolution de section radiale trapézoïdale, la grande base générant la surface libre intérieure.

Selon d'autres modes de réalisation de l'invention le segment de feu à une section radiale trapézoïdale isocèle ou trapézoïdale rectangle.

Selon une caractéristique de l'invention le segment de feu est fixé à la plaque avec interposition d'une bague antifluage.

Selon un mode de réalisation de l'invention un corps annulaire est inséré dans le segment de feu, ce corps présentant une raideur supérieure à celle du segment de feu.

D'autres caractéristiques et avantages de la présente invention résulteront de la description qui suit et qui se réfère au dessin en annexe pour illustrer de manière non limitative plusieurs formes d'exécution du joint de culasse conformément à l'invention, dans lequel :

– la figure 1 est une vue partielle, en coupe, d'un moteur équipé d'un joint de culasse de conception classique ;

– les figures 2 et 3 sont des vues partielles en coupe d'un moteur équipé d'un joint de culasse selon une réalisation de l'invention, respectivement avant et après serrage de la culasse sur le bloc cylindres ;

– les figures 4 à 6 sont des vues partielles en coupe de joints de culasse selon des variantes de réalisation de l'invention.

Le moteur à combustion représenté figures 1 à 3 a été restreint aux seuls éléments permettant la compréhension de l'invention.

Conformément aux figures, le moteur est composé d'un bloc cylindres 2, comportant au moins un logement ou alésage cylindrique 9 où coulisse un piston 5, et d'une culasse 3 chapeautant ce bloc cylindres et dans laquelle est formée une cavité 6 en regard du logement cylindrique 9. Cette cavité 6 reçoit classiquement des moyens d'alimentation en air comburant et en combustible qui n'ont pas été figurés.

Entre le bloc cylindres 2 et la culasse 3 est interposé un joint de culasse.

Ce joint comporte selon l'art antérieur, figure 1, une plaque 8 formant le corps de joint réalisé par exemple par un carton d'amiante. Cette plaque 5 comporte un orifice au niveau du cylindre 9 pour le passage des gaz. Cet orifice est entouré par un anneau ou segment de feu 4. Classiquement le segment de feu est réalisé par une tôle métallique formant un segment profilé en U, sertie sur le corps du joint 8.

Cette forme en U du segment de feu 4 disposée entre les deux faces planes de la culasse 3 et du bloc cylindres 2 génère deux cavités annulaires 7 en forme de coin.

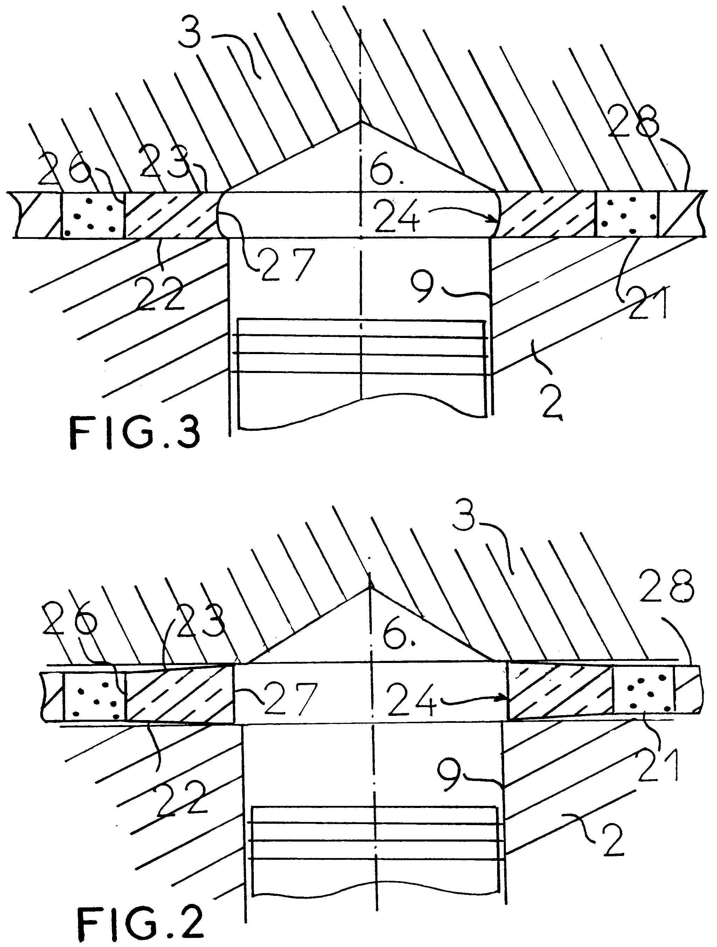

Le joint de culasse selon l'invention présente, figure 2, un segment de feu 24 de section trapézoïdale isocèle, avant le serrage de la culasse 3 sur le bloc cylindres 2. Ce segment de feu 24, fabriqué dans un matériau ductile et résistant à la chaleur de préférence métallique tel que du cuivre recuit ou de l'inox recuit mais pouvant être également en résine chargée ou en matériau plastique, présente une surface libre intérieure 27 de forme cylindrique et admettant comme génératrice la grande base du trapèze.

Cette surface libre intérieure 27 est destinée à assurer la continuité de la chambre de combustion entre le cylindre 9 et la cavité 6 en regard portée par la culasse 3. Le segment de feu 24 comporte également des surfaces supérieure 23 et inférieure 22 destinées à venir en contact avec les faces d'appui ou tablatures respectives de la culasse 3 et du bloc cylindres 2 et enfin une surface extérieure latérale 26. Le segment de feu 24 est fixé à une plaque 28 de jonction. La plaque 28 assure la liaison avec les différents joints entourant les divers orifices et constitue l'armature du joint de culasse. Entre la plaque 28 et le segment 24 on interpose une bague antifluage 21 cerclant le segment 24.

Lors du serrage, figure 3, le segment 24 est écrasé : les surfaces 22 et 23 deviennent horizontales. Le segment 24, pris entre d'une part les tablatures de la culasse 3 et du bloc cylindres 2 et d'autre part la bague antifluage 21, se déforme au niveau de sa surface libre intérieure 27.

La forme évasée du segment 24 au voisinage de la surface libre 27 initialement droite et la ductibilité du matériau utilisé font que sous l'action du serrage, la surface libre 27 s'incurve et forme une surface uniformément concave, la concavité étant tournée vers la chambre de combustion 9.

La concavité de la surface libre intérieure 27 du segment de feu 24 a pour avantages de supprimer les cavités angulaires au niveau des plans de joint, de bien résister aux contraintes thermiques et à la pression et d'offrir une étanchéité d'autant plus grande que la pression s'élève. Par ailleurs la forme initiale évasée, en l'occurence trapézoïdale du joint 24 assure dès le début du serrage un contact entre les plans de joint ou tablatures de la culasse 3 et du bloc cylindres 2, de ce fait il ne peut se produire de faille ou d'interstice entre le joint 24 et les plans de joint. Ce type de joint à section trapézoïdale permet donc d'assurer une étanchéité au plus près de l'alésage 9 et ce de façon auto-étanche et sans créer d'arêtes chaudes.

Afin de faciliter la création de la concavité de la surface libre intérieure 27 et du segment 24 il est préférable que les plans d'appui de la culasse 3 et du bloc cylindres 2 aient une rugosité adaptée au couple de serrage, aux pressions à contenir et à leurs dynamiques ainsi qu'aux températures. On peut par exemple définir sur les faces d'appui de la culasse 3 et du bloc cylindre 2 au droit de segment de feu 24, des surfaces d'appui comportant des gorges concentriques de section parallélépipédique de quelques centièmes ou dixième de millimètre.

Il est évident que l'invention n'est pas limitée à la forme trapézoïdale isocèle décrite aux figures 2 et 3 et qu'on peut y apporter des variantes d'exécution.

Ainsi les figures 4 et 5 montrent différentes géométries possibles pour le segment de feu avant serrage. La figure 4 montre un segment de feu 44 de forme trapézoïdale rectangle et la figure 5 montre un segment de feu 54 de forme plus complexe. La caractéristique de ces segments 44, 54 est de présenter des sections radiales s'évasant au voisinage des surfaces libres intérieures 47, 57 pour atteindre une épaisseur ou hauteur maximale au droit de ces surfaces 47, 57 et de présenter des surfaces libres intérieures droite 47 ou concave 57.

Ainsi la figure 6 montre un segment de feu 64 à section radiale trapézoïdale comportant un corps annulaire 69 inséré. Ce corps annulaire 69 est de caractéristiques physiques adaptées : raideur, coefficient de dilatation....

Ainsi la bague antifluage peut être disposée non pas à la périphérie mais au centre du segment de feu.

## Revendications

[1] Joint de culasse, destiné à être placé entre le bloc cylindres (2) et la culasse (3) d'un moteur à combustion interne, comprenant une plaque (28) constituant l'armature munie d'orifices pour le passage des fluides et de joints d'étanchéité autour de ces orifices, l'étanchéité aux gaz de combustion étant réalisée au niveau de chaque cylindre (9) par une pièce de révolution ou segment de feu (24), ledit segment (24) présentant des surfaces supérieure (23) ou inférieure (22) destinées à venir en contact avec respectivement la culasse (3) et le bloc cylindres (2), une surface extérieure (26) assurant la liaison avec ladite plaque (28) et une surface libre intérieure (27) destinée à assurer la continuité de la chambre de combustion entre le cylindre (9) et la cavité (6) en regard portée par la culasse (3), caractérisé en ce qu'après le serrage de la culasse (3) sur le bloc cylindres (2), la surface intérieure libre (27) du segment de feu (24) soit uniformément concave.

[2] Joint de culasse selon la revendication 1 caractérisé en ce qu'avant serrage de la culasse (3) sur le bloc cylindres (2) ledit segment a sa surface intérieure libre (27) sensiblement droite ou concave.

[3] Joint de culasse selon l'une quelconque des revendications 1 et 2 caractérisé en ce qu'avant serrage de la culasse (3) sur le bloc cylindres (2) le segment de feu (24) présente une hauteur maximale au niveau de la surface libre intérieure (27).

[4] Joint de culasse selon l'une quelconque des revendications 1 à 3 caractérisé en ce que le segment de feu (24) présente, avant serrage de la culasse (3) sur le bloc cylindre (2), une section radiale évasée au voisinage de la surface intérieure libre (27).

[5] Joint de culasse selon l'une quelconque des revendications 1 à 4 caractérisé en ce que le segment de feu (24) présente, avant serrage de la culasse (3) sur le bloc cylindre (2), une section radiale trapézoïdale, la grande base générant la surface libre intérieure (27).

[6] Joint de culasse selon la revendication 5 caractérisé en ce que le segment de feu (24) présente une section radiale trapézoïdale isocèle.

[7] Joint de culasse selon la revendication 5 caractérisé en ce que le segment (44) présente une section radiale trapézoïdale rectangle.

[8] Joint de culasse selon l'une quelconque des revendications 1 à 7 caractérisé en ce que entre la plaque (28) et le segment de feu (24) est interposée une bague antifluage (21).

[9] Joint de culasse selon l'une quelconque des revendications 1 à 8 caractérisé en ce que le segment de feu (24) est réalisé en matériaux ductiles et résistants à la chaleur.

[10] Joint de culasse selon l'une quelconque des revendications 1 à 9 caractérisé en ce qu'un corps annulaire (69) est inséré dans le segment de feu (64), le matériau constituant ledit corps (69) des caractéristiques physiques adaptées.

FIG.1

FIG.4

FIG.5

FIG.6

FIG.3

FIG.2

European Patent Office

**EUROPEAN SEARCH REPORT**

Application Number

EP 91 40 2894

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 518 013 (ELRING DICHTUNGSWERKE GMBH)<br>* page 5, line 16 - page 5, line 27; figure 6 *<br>--- | 1,2,3,9 | F02F11/00<br>F16J15/12 |
| A | GB-A-2 019 507 (GOETZE A.G)<br>* page 2, line 59 - page 2, line 64; figure 8 *<br>--- | 1,2,3,9 | |
| A | FR-A-1 327 379 (LECHLER DICHTUNGSWERKE OHG)<br>* page 2, column 2, line 7 - page 2, column 2, line 39; figures *<br>--- | 5,6 | |
| A | CH-A-368 968 (AKTIENGESELLSCHAFT A.SAURER)<br>* figures 1,2 *<br>--- | 4,5,7 | |
| A | DE-A-2 048 569 (KEMPCHEN & CO GMBH)<br>* figures 1-3 *<br>----- | 1 | |
| | | | TECHNICAL FIELDS SEARCHED (Int. Cl.5)<br><br>F02F<br>F16J |

The present search report has been drawn up for all claims

| Place of search | Date of completion of the search | Examiner |
|---|---|---|
| THE HAGUE | 10 JANUARY 1992 | MOUTON J.M.M.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)